# EUROPÄISCHE PATENTANMELDUNG

(11) **EP 0 802 467 A2**
(43) Veröffentlichungstag der Anmeldung: **22.10.1997**
(21) Anmeldenummer: 97250119.1
(22) Anmeldetag: 16.04.1997
(51) Int. Cl.: G05B 19/416

(54) **Verfahren und Einrichtung zum Positionieren eines Gerätes**

(30) Priorität: 19.04.1996 DE 19617107
(71) Anmelder: MANNESMANN Aktiengesellschaft, 40213 Düsseldorf (DE)
(72) Erfinder: Elspass, Stefan, Dipl.-Ing., 47918 Tönisvorst (DE); Hülsmann, Michael, Dipl.-Ing., 58313 Herdecke (DE); Koschorrek, Rolf, Dipl.-Ing., 58300 Wetter (DE)
(74) Vertreter: Presting, Hans-Joachim, Dipl.-Ing.

(57) **Zusammenfassung**

Die Erfindung betrifft ein Verfahren und eine Einrichtung zum Positionieren eines Gerätes durch einen zumindest zwei feste Antriebsgeschwindigkeiten aufweisenden Antrieb, der einen elektrischen Motor umfaßt, wobei der Antrieb mit der höchsten Antriebsgeschwindigkeit beginnend zum Schalten auf die nächstniedrigere Antriebsgeschwindigkeit an jeweils einem vorbestimmten Abschaltort vor einem vorgegebenen Zielpunkt abgeschaltet und bis zum Erreichen der nächstniedrigeren Antriebsgeschwindigkeit abgebremst wird. Um ein Gerät mit hoher Genauigkeit über einen großen Lastbereich durch einen Antrieb mit mindestens zwei festen Antriebsgeschwindigkeiten zu positionieren, und zwar unter Verwendung eines preisgünstigen polumschaltbaren Drehstrom-Asynchron-Motors als Antriebselement, wird mit der Erfindung vorgeschlagen, daß der Beschleunigungsverlauf gemessen und in Abhängigkeit vom Beschleunigungsverlauf die Abschaltorte selbsttätig bestimmt werden.

## Beschreibung

Die Erfindung betrifft ein Verfahren und eine Einrichtung zum Positionieren eines Gerätes durch einen zumindest zwei feste Antriebsgeschwindigkeiten aufweisenden Antrieb, der einen elektrischen Motor umfaßt, wobei der Antrieb mit der höchsten Antriebsgeschwindigkeit beginnend zum Schalten auf die nächstniedrigere Antriebsgeschwindigkeit an jeweils einem vorbestimmten Abschaltort vor einem vorgegebenen Zielpunkt abgeschaltet und bis zum Erreichen der nächstniedrigeren Antriebsgeschwindigkeit abgebremst wird.

Aus der Werbeschrift "Positioniercontroller GEL 7100" ist eine Positioniereinrichtung mit einem polumschaltbaren Drehstrommotor bekannt, der mehrere feste Antriebsgeschwindigkeiten aufweist, wobei der Antrieb zur Positionierung mit der höchsten Antriebsgeschwindigkeit beginnend zum Schalten auf die nächstniedrigere Antriebsgeschwindigkeit jeweils in einem vorbestimmten Abstand vor einem vorgegebenen Zielpunkt abgeschaltet und bis zum Erreichen der nächstniedrigeren Antriebsgeschwindigkeit abgebremst wird. Der Abstand der Abschaltorte vor dem jeweiligen Zielpunkt ist dabei für alle zulässigen Antriebsbelastungen für ein und dieselbe Antriebsgeschwindigkeit immer der gleiche; da unterschiedliche Antriebsbelastungen mit einer Veränderung des Beschleunigungsverhaltens und des Bremsverhaltens der Positioniereinrichtung verbunden sind, was durch die Pufferwege innerhalb des Bremsweges abgefangen werden muß, müssen bei diesem Positionierverfahren entsprechend lange Pufferwege bei den einzelnen festen Antriebsgeschwindigkeiten vorgesehen werden. Die Pufferwege sind so gewählt, daß auch bei maximal erlaubter Antriebslast noch auf die nächstniedrigere Geschwindigkeit geschaltet werden kann, so daß der Zielpunkt zur Erreichung einer hohen Zielgenauigkeit schließlich aus der kleinsten Antriebsgeschwindigkeit heraus angefahren werden kann. Die hierzu erforderlichen sehr langen Pufferwege führen dazu, daß die Positionierungen, die nach diesem Verfahren arbeiten, relativ langsam sind.

Außerdem sind Einrichtungen und Verfahren für die Positionierung eines Gerätes mittels eines Frequenzumrichters für einen Drehstrommotor bekannt, bei dem ein Wegmesser zur geregelten Ansteuerung des Drehstrommotors verwendet wird. Dabei ermöglicht es der Frequenzumrichter einen vorgegebenen Zielpunkt durch Änderung der Motordrehzahl in Abhängigkeit vom Abstand zum vorgegebenen Zielpunkt so einzustellen, daß das Gerät mit hoher Genauigkeit an der Zielposition zum Stehen kommt. Nachteilig ist dabei, daß ein Frequenzumrichter eine teure und empfindliche Baueinheit ist.

Es ist **Aufgabe** der Erfindung, ein Verfahren und eine Einrichtung zum schnellen Positionieren eines Gerätes mit hoher Positioniergenauigkeit über einen großen Lastbereich durch einen Antrieb mit mindestens zwei festen Antriebsgeschwindigkeiten anzugeben, bei dem als Antriebselement ein preisgünstiger polumschaltbarer Drehstrom-Asynchron-Motor verwendet wird. Das Positionieren soll dabei technisch so erfolgen, daß für die jeweilige Antriebsgeschwindigkeit an vorbestimmten Abschaltorten vor einem vorgegebenen Zielpunkt der Motor abgeschaltet und abgebremst wird, um anschließend auf die nächstniedrigere Antriebsgeschwindigkeit umgeschaltet zu werden, aber ohne die Positionierzeit durch unerwünschte Pufferwege zur Erreichung einer hohen Positioniergenauigkeit zu vergrößern.

Die **Lösung** dieser Aufgabe hinsichtlich des Verfahrens ist erfindungsgemäß gekennzeichnet durch die im Patentanspruch 1 angegebenen Merkmale. Durch die kennzeichnenden Merkmale der Unteransprüche 2 bis 14 ist dieses Verfahren in vorteilhafter Weise weiter ausgestaltbar. Eine Einrichtung zur Durchführung des erfindungsgemäßen Verfahrens weist die Merkmale des Patentanspruchs 15 auf; durch die kennzeichnenden Merkmale der Unteransprüche 16 bis 21 ist diese Einrichtung in vorteilhafter Weise weiter ausgestaltbar.

Durch die erfindungsgemäße Ausbildung des Positionierverfahrens wird eine schnelle Positionierung eines Gerätes mit hoher Positioniergenauigkeit erzielt, und zwar unter Verwendung eines preisgünstigen wartungsarmen Motors mit zumindest zwei festen Antriebsgeschwindigkeiten. Dadurch, daß der Beschleunigungsverlauf gemessen und anschließend in Abhängigkeit vom Beschleunigungsverlauf die Abschaltorte für die einzelnen Antriebsstufen selbsttätig bestimmt werden, fallen die sonst bei hoher Positioniergenauigkeit über einen großen Lastbereich erforderlichen Pufferwege weg.

Besonders einfach gestaltet sich das Verfahren, wenn anhand des gemessenen Beschleunigungsverlaufs die voraussichtliche Länge des Bremsweges berechnet wird und wenn danach unter Zugrundelegung des berechneten Bremsweges die Abschaltorte für die einzelnen Antriebsgeschwindigkeiten bestimmt werden. Dabei werden nur die unvermeidlichen Schwankungen der Länge des Bremsweges bei der Bestimmung der Abschaltorte berücksichtigt.

Vorteilhafterweise wird der Beschleunigungsverlauf des Gerätes in Abhängigkeit von der Last als Beschleunigungsweg zusammen mit dem zugehörigen Bremsweg in einem Bremswegspeicher abgelegt und anhand der gespeicherten Werte nach Messung eines Beschleunigungsweges über den zugehörigen Bremsweg die Abschaltorte für die einzelnen Antriebsgeschwindigkeiten berechnet, wodurch auf einfache Art und Weise nichtlineare Zusammenhänge zwischen Last- und Beschleunigungsweg berücksichtigt werden.

Der Bremsweg läßt sich dann anhand der gespeicherten Werte durch einfache Interpolation der benachbarten Speicherwerte berechnen.

Alternativ dazu lassen sich die Abschaltorte auch mittels eines mathematischen Modells, welches das Beschleunigungsverhalten und das Bremsverhalten des Antriebs in Abhängigkeit von der Antriebsgeschwindigkeit unter wechselnden Lastbedingungen enthält, berechnen, wobei der konkrete Motor in Form von Parametem in das Modell eingeht.

Vorteilhafterweise werden bei einer Lernfahrt, insbesondere bei Inbetriebnahme, die Parameter gemessen, mit denen dann mittels des mathematischen Modells der Beschleunigungsweg und der Bremsweg des Antriebs unter wechselnden Lastbedingungen errechnet wird.

Sicherheitshalber wird bei der Inbetriebnahme des Gerätes der Beschleunigungsweg und der Bremsweg des unbelasteten Antriebs ermittelt und daraus für die einzelnen Antriebsgeschwindigkeiten jeweils eine Mindestentfernung des Abschaltortes vom Zielpunkt bestimmt, die insbesondere bei Positionierung des lastfreien bzw. unbelasteten Gerätes ohne jeglichen Meßaufwand verwendet werden können.

Mit der Erfindung wird vorgeschlagen, daß der zeitliche Verlauf des Bremsweges während jedes Positioniervorgangs gespeichert wird und daß bei Überschreiten einer vorgegebenen maximalen Abweichung vom Zielpunkt der Positioniervorgang anhand der gespeicherten Werte wiederholt wird, indem das Gerät vor dem emeuten Anfahren der Zielposition einfach zurückgefahren wird. Insbesondere wird der Positioniervorgang wiederholt, wenn der Zielpunkt um mehr als eine vorgegebene Abweichung verfehlt worden ist.

Mit geringem Aufwand lassen sich die einzelnen Zielpositionen dadurch eingeben, daß jede einzelne gewünschte Zielposition über einen Steuerschalter einmal manuell angefahren wird und bei Erreichen der gewünschten Zielposition eine Lerntaste am Steuerschalter betätigt wird, wodurch die Zielinformation spannungsausfallsicher abgespeichert wird. Dadurch erübrigt sich insbesondere ein genaues Vermessen der Zielposition. Speziell ist bei der Erfindung vorgesehen, daß eine Vielzahl von Zielpositionen abgespeichert wird, was ein zyklisches Anfahren mehrerer Zielpositionen ermöglicht.

Eine sehr hohe Positioniergenauigkeit wird dadurch erzielt, daß der Zielpunkt immer aus der kleinsten Geschwindigkeit heraus angefahren wird.

Die erfindungsgemäße Einrichtung für die Positionierung eines Gerätes ist so ausgebildet, daß das Gerät mittels eines dem Motor vorgeschalteten Getriebes einer an den Motor angeschlossenen aufgrund eines Programms betätigbaren Steuerung und einem mit dem Motor und der Steuerung verbundenen Wegmeßsystem positionierbar ist. Dabei sind mittels des Wegmeßsystems Informationen über den Standort, die Fahrtrichtung und die Geschwindigkeit des Gerätes kontinuierlich an die Steuerung weiterleitbar. Das Wegmeßsystem läßt sich einfach aufbauen, wenn es aus einem inkrementalen Wegmeßsystem oder aus einem absolut kodierbaren Wegmeßsystem besteht. Zur Modifizierung der Positionierung ist an die programmierte Steuerung und / oder an ein Handsteuergerät ein Computer anschließbar, der mit der entsprechenden Software versehen ist. Mit Vorteil ist an die Steuerung ein Kodierschalter für die Zielvorgabe angeschlossen, der das Ziel vorgibt, das auf diese Weise ohne Messungen und dergleichen eingebbar ist, wobei der Start der Positionierung manuell auslösbar ist. Insbesondere ist es vorgesehen, daß das Handsteuergerät den Kodierschalter für die exakte Zielvorgabe enthält.

Die Steuerung läßt sich dadurch vereinfachen, daß ein Speicher vorgesehen ist, in dem der Beschleunigungsweg und die zu den Antriebsgeschwindigkeiten zugehörigen Bremswege des Gerätes lastabhängig tabellarisch abgelegt sind.

Ein Ausführungsbeispiel der Erfindung ist in der Zeichnung dargestellt und wird nachfolgend näher beschrieben. Es zeigen:
- Fig. 1: eine Einrichtung für die Positionierung eines Gerätes in schematischer Darstellung,
- Fig. 2: ein Geschwindigkeits-Weg-Diagramm des Positioniervorganges mit und ohne Lasteinfluß,
- Fig. 3: eine Einrichtung für die Positionierung eines Gerätes mit Computer und Steuerschalter und
- Fig. 4: die Zieleingabe mittels Steuerschalter.

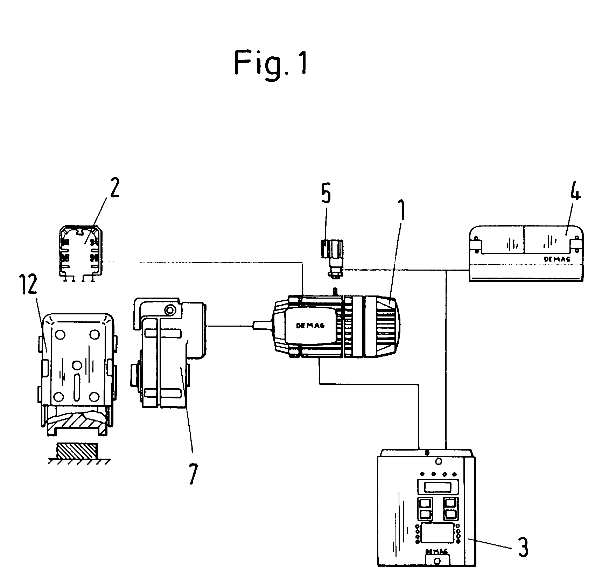

Fig. 1 zeigt den Antrieb bestehend aus einem polumschaltbaren Drehstrom-Asynchron-Motor 1, der mit einer Stromversorgung 2 verbunden ist. Der Stator des Drehstrom-Asynchron-Motors 1 ist mit zwei separaten Wicklungen versehen, die wahlweise mit der elektrischen Stromversorgung 2 verbunden werden können. Eine mit dem Drehstrom-Asynchron-Motor 1 verbundene Steuerung 3 sorgt für eine automatische Einstellung einer jeweils für eine der beiden Wicklungen vorgegebenen Antriebsgeschwindigkeit, die über einen Schalter innerhalb der Steuerung 3 mit der Stromversorgung 2 wahlweise verbindbar sind. Die Einstellung der Antriebsgeschwindigkeit erfolgt mit Hilfe eines Wegmeßsystems 4, das über einen Positionsgeber 5 die Umdrehungen der Motorachse des Motors 1 mißt (die Position kann selbstverständlich auch am Getriebe oder direkt an der Fahrtstrecke erfaßt werden). Hierzu sind vom Wegmeßsystem 4 ausgegebene Informationen über den Standort, die Fahrtrichtung und die Geschwindigkeit des Gerätes kontinuierlich an die Steuerung 3 leitbar; das Wegmessystem 4 kann auch in der Steuerung 3 enthalten sein. Die Steuerung 3 verfügt zur Auswertung dieser Informationen über ein elektronisches Steuerprogramm, das die Steuerimpulse zum Einschalten oder Ausschalten der Stromversorgung einer der Wicklungen des Motors 1 in Abhängigkeit von vorbestimmten Abschaltorten ausgibt. Femer ist die Motorachse 6 mit einem vorgeschalteten Getriebe 7 verbunden, das mit einem eigenen Antriebsmotor versehen ist, der zusammen mit dem Getriebe 7 einen separaten Feingangantrieb des Drehstrom-Asynchron-Motors 1 bildet. Bei dem zu positionierenden Gerät kann es sich insbesondere um ein mit der Antriebsachse 6 verbundenen Radblock 12 handeln.

Über die Steuerung 3 ist es möglich, entweder eine der beiden Wicklungen des Drehstrom-Asynchron-Motors 1 oder den Motor des Getriebes 7 ein- und auszuschalten. Außerdem sorgt die Steuerung 3 dafür, daß bei Erreichen einer vorgegebenen Antriebsgeschwindigkeit diese konstant gehalten wird und daß nach Abschalten des Motors 1 oder des Getriebes 7 bei Erreichen der nächstniedrigeren Antriebsgeschwindigkeit die für diese Antriebsgeschwindigkeit zuständige Einheit (eine der beiden Wicklungen oder der Motor des Getriebes 7) eingeschaltet wird. Bei Erreichen eines vorbestimmten Abschaltortes vor einem vorgegebenen Zielpunkt ist die entsprechende Antriebseinheit durch die Steuerung 3 wieder abschaltbar. Die Steuerung 3 verfügt über einen elektrischen Speicher, in dem der Beschleunigungsweg bis zum Erreichen der höchsten Antriebsgeschwindigkeit ablegbar ist. Zusätzlich verfügt die Steuerung 3 über einen weiteren Speicher, in dem tabellarisch lastabhängig geordnet der Beschleunigungsweg und die zu den Antriebsgeschwindigkeiten zugehörigen Bremswege des Gerätes abgelegt sind. Altemativ dazu kann die Steuerung 3 auch mit einem Computer 8 ausgestattet sein, durch den anhand des erfaßten Beschleunigungsweges mittels eines mathematischen Modells, welches das Beschleunigungsverhalten und das Bremsverhalten des Antriebs in Abhängigkeit von der Antriebsbelastung enthält, ermittelbar ist; dabei wird von einem linearen Zusammenhang zwischen gemessenem Beschleunigungsweg und dem zu erwartenden Bremsweg ausgegangen. Die festen Antriebsgeschwindigkeiten des Positionierverfahrens umfassen zur sprachlichen Vereinfachung hier immer auch die Antriebsgeschwindigkeit Null, d.h. im einfachsten Fall verfügt der Motor 1 mit der Steuerung 3 über eine einzige Antriebsgeschwindigkeit, die durch Abschaltung und Abbremsung des Motors 1 auf die zweite Antriebsgeschwindigkeit, die gleich Null ist, heruntergefahren wird. Antriebe mit nur einer von Null verschiedenen Antriebsgeschwindigkeit, also mit genau zwei Antriebsgeschwindigkeiten, stellen einen wichtigen und relativ häufigen Fall dar, bei dem allerdings allein die Positioniergenauigkeit im Vordergrund steht.

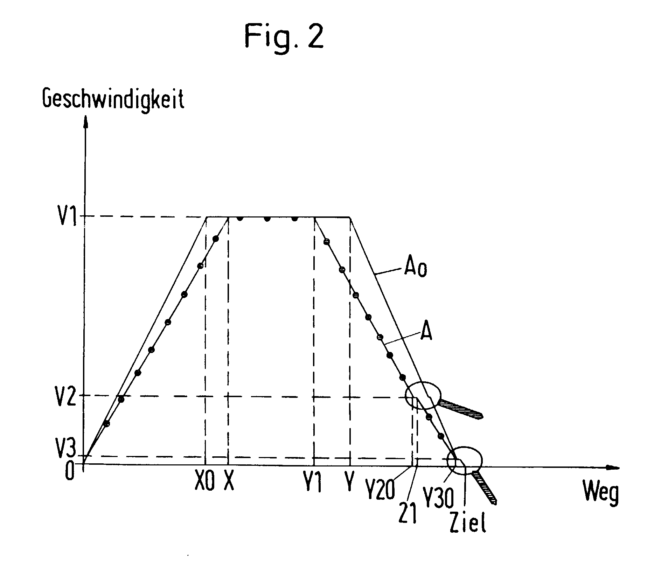

Bei der Positionierung eines sich an einem beliebigen Standort mit der Geschwindigkeit Null befindlichen Gerätes wird durch die Steuerung 3 die Wicklung des Motors 1 mit der Stromversorgung 2 verbunden, welche die höchste Antriebsgeschwindigkeit erzeugt. Fig. 2, die ein Geschwindigkeits-Weg-Diagramm des Positioniervorganges mit und ohne Lasteinfluß zeigt, läßt erkennen, daß das Gerät von der Geschwindigkeit Null auf die Geschwindigkeit V1 beschleunigt wird (Anstieg A bei Last, A₀ lasffrei). Ab Erreichen der Geschwindigkeit V1 wird das Gerät gesteuert durch die Steuerung 3 nicht weiter beschleunigt, sondern die Geschwindigkeit konstant gehalten. Der Beschleunigungsweg X wird von der Steuerung 3 erfaßt und mit dem Beschleunigungsweg X₀ des unbelasteten Antriebs verglichen. Anhand der Differenz X-X₀ ermittelt die Steuerung 3 den Bremsweg Z-Y₁ und damit den Abschaltort Y₁. Bei Erreichen von Y₁ wird die entsprechende Wicklung des Motors 1 wieder abgeschaltet und eine elektrische Bremse eingeschaltet, beispielsweise indem einer der drei Leiter der Drehstromversorgung unterbrochen wird. Selbstverständlich ist es auch möglich, eine separate mechanische Bremse vorzusehen und diese nach Abschalten der Wicklung des Motors 1 einzuschalten. Wenn die Geschwindigkeit des Geräts bis auf die Geschwindigkeit V₂ abgesunken ist, wird die zweite Wicklung des Motors 1 durch die Steuerung 3 mit der Stromversorgung 2 verbunden. Nach Erreichen des Wegpunktes Y₂₁ wird auch die zweite Wicklung von der Stromversorgung 2 getrennt und ebenfalls eine elektrische oder mechanische Bremse eingeschaltet. Erreicht das abgebremste Gerät die Geschwindigkeit V₃, wird die Bremse gelöst, die Wicklung von der Stromversorgung 2 getrennt und der Motor des Getriebes 7 durch die Steuerung 3 eingeschaltet. Bei Erreichen des Punktes Y₃₁ wird auch dieser Motor ausgeschaltet und eine ebenfalls für diese Antriebsstufe vorgesehene mechanische Bremse eingeschaltet. Das abgebremste Gerät kommt dann im Bereich des Zielpunktes Z zum Stehen.

Die selbsttätige Bestimmung der Abschaltorte Y₁ ,Y₂₁ , Y₃₁ , durch die Steuerung 3 erfolgt in folgenden Schritten:

Anhand des gemessenen Beschleunigungsweges X werden aus dem Bremswegspeicher die zugehörigen Bremswege Y₂₀ - Y₁ , Y₃₀ - Y₂₁ und Z - Y₃₁ entnommen; die Wegstrecken Y₂₁ - Y₂₀ und Y₃₁ - Y₃₀, in denen die Antriebsgeschwindigkeit durch die Steuerung 3 konstant gehalten wird, sind unabhängig von der Last jeweils konstant; sie hängen lediglich von der Schwankungsbreite ab, welche die Bremsweglänge unvermeidlich hat. Die Bestimmung der Abschaltorte Y₁, Y₂₁ und Y₃₁ unter Berücksichtigung der Schwankungen der Bremsweglänge Y₂₁ - Y₂₀ und Y₃₁ - Y₃₀ ermöglicht es, ein Gerät in kürzester Zeit zielgenau zu positionieren, indem es an den exakt berechenbaren Abschaltorten abgeschaltet und abgebremst wird, so daß keine unerwünschten Ausgleichswege oder Pufferwege mehr erforderlich sind.

Um die Zahl der im Bremswegspeicher abgelegten Beschleunigungswege mit den zugehörigen Bremswegen nicht zu groß werden zu lassen, werden für die gemessenen Beschleunigungswege, die zwischen zwei im Speicher abgelegten Beschleunigungswegen liegen, die zugehörigen Bremswege anhand der zugehörigen Bremswege durch Interpolation bestimmt. Altemativ zu einer Tabelle können die Bremswege und damit die Abschaltorte auch mittels eines mathematischen Modells, welches das Beschleunigungsverhalten und das Bremsverhalten des Antriebs in Abhängigkeit von der Antriebsgeschwindigkeit enthält, berechnet werden. Die für ein solches mathematisches Modell benötigten, das reale System beschreibenden Parameter werden bei einer Lemfahrt gemessen; dies findet z.B. einmal bei Inbetriebnahme statt.

Zweckmäßigerweise werden bei der Inbetriebnahme des Gerätes der Beschleunigungsweg und der Bremsweg des unbelasteten Antriebs ermittelt und für die einzelnen Antriebsgeschwindigkeiten jeweils eine Mindestentfernung des Abschaltortes vom Zielpunkt bestimmt.

Wird durch die Steuerung festgestellt, daß der Zielpunkt außerhalb eines vorgegebenen Fehlerbereiches liegt, wird der Positioniervorgang wiederholt, indem das Gerät vor die Zielposition zurückgefahren wird. Dies wird der Steuerung 3 dadurch ermöglicht, daß bei jedem Positioniervorgang der zeitliche Verlauf des Bremsweges gespeichert wird, so daß anhand der gespeicherten Werte der Positioniervorgang wiederholt werden kann.

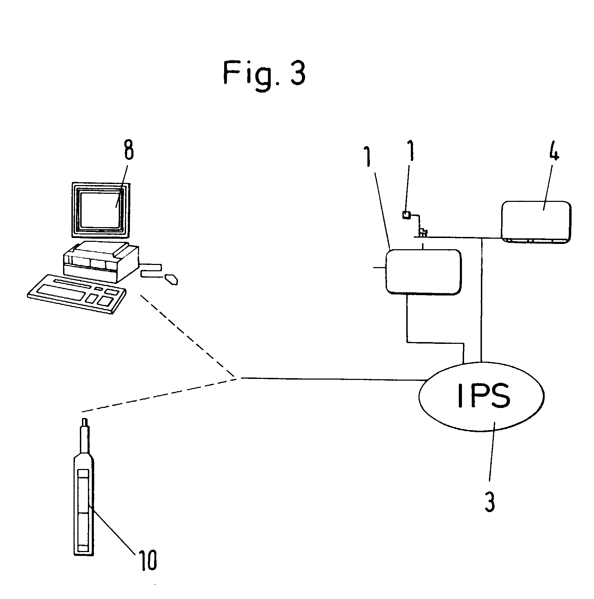

Zum zyklischen Anfahren einer Vielzahl von (beispielsweise 256) Zielpositionen, werden diese vorher in einem Speicher abgelegt. Wie Fig. 3 zeigt, können die Zielpositionen auch wahlfrei über einen Computer 8 z.B. als Zahlenwerte eingegeben und an die Steuerung übergeben werden, der an die programmierte Steuerung 3 und/oder an ein Handsteuergerät mit Steuerschalter 10 angeschlossen ist. Bei einer einfacheren Ausführung ist lediglich ein Kodierschalter 9 für die Zielvorgabe an die Steuerung angeschlossen, mit dem das Ziel vorgebbar und der Start manuell auslösbar ist. Der Kodierschalter 9 kann insbesondere im Handsteuergerät enthalten sein.

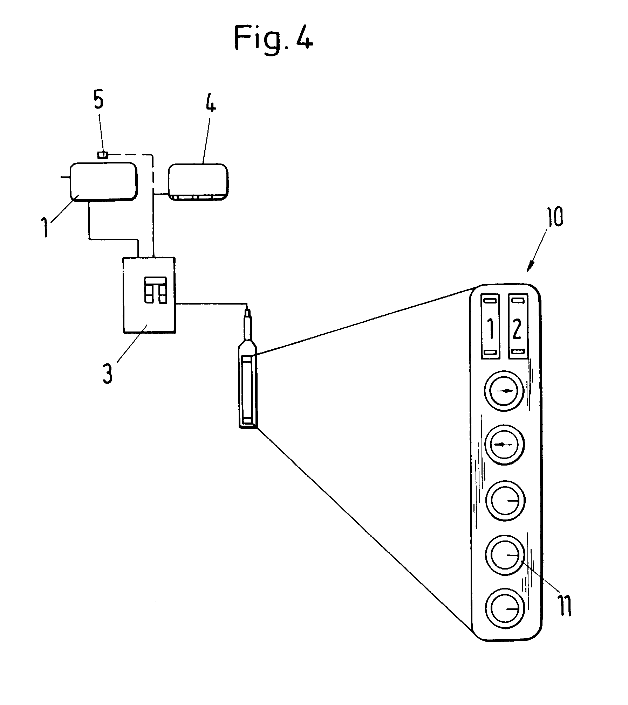

Im Regelfall erfolgt die Eingabe der gewünschten Zielposition aber - wie sich Fig. 3 entnehmen läßt - durch den Steuerschalter 10, mit dem jede einzelne gewünschte Zielposition einmal manuell angefahren wird. Bei Erreichen der gewünschten Zielposition wird eine Lerntaste 11 (dargestellt in Fig. 4) am Steuerschalter 10 kurzzeitig betätigt, wodurch die Zielinformation spannungsausfallsicher abgespeichert wird. Die Übemahme der abgespeicherten Zielpositionen erfolgt automatisch nach Beendigung der Zielpositionsvorgabe mittels des Steuerschalters 10. Eine beliebige Anzahl der Zielpositionen kann dann später in beliebig vorgebbarer Reihenfolge zyklisch angefahren werden.

Zur Erreichung einer hohen Positioniergenauigkeit wird jeder Zielpunkt aus der kleinsten von Null verschiedenen Geschwindigkeit heraus angefahren. Selbstverständlich kann die Steuerung 9 ständig mit dem Computer 8 im Datenaustausch stehen, so daß beispielsweise die Reihenfolge der zyklisch anzufahrenden Positionen direkt über die Eingabeeinheit des Computers 8 vorgegeben oder bei Bedarf verändert werden kann.

Das Wegmeßsystem 4 ist wegen des einfachen Aufbaus als auch wegen der geringen Störanfälligkeit als inkrementales Wegmeßsystem ausgebildet, es kann sich aber auch um ein absolut kodierbares Wegmeßsystem handeln.

### BEZUGSZEICHENLISTE:

- 1: Drehstrom-Asynchron-Motor
- 2: Stromversorgung
- 3: Steuerung
- 4: Wegmeßsystem
- 5: Positionsgeber
- 6: Motorachse
- 7: Getriebe
- 8: Computer
- 9: Kodierschalter
- 10: Steuerschalter
- 11: Lemtaste
- 12: Radblock

## Patentansprüche

1. Verfahren zum Positionieren eines Gerätes durch einen zumindest zwei feste Antriebsgeschwindigkeiten aufweisenden Antrieb, der einen elektrischen Motor umfaßt, wobei der Antrieb mit der höchsten Antriebsgeschwindigkeit beginnend zum Schalten auf die nächstniedrigere Antriebsgeschwindigkeit an jeweils einem vorbestimmten Abschaltort vor einem vorgegebenen Zielpunkt abgeschaltet und bis zum Erreichen der nächstniedrigeren Antriebsgeschwindigkeit abgebremst wird,
dadurch gekennzeichnet,
daß der Beschleunigungsverlauf gemessen und in Abhängigkeit vom Beschleunigungsverlauf die Abschaltorte selbsttätig bestimmt werden.

2. Verfahren nach Anspruch 1,
dadurch gekennzeichnet,
daß anhand des gemessenen Beschleunigungsverlaufs die voraussichtliche Länge des Bremsweges berechnet wird und daß danach unter Zugrundelegung des berechneten Bremsweges die Abschaltorte bestimmt werden.

3. Verfahren nach Anspruch 1 oder 2,
dadurch gekennzeichnet,
daß bei der Bestimmung der Abschaltorte die Schwankungen der Länge des Bremsweges berücksichtigt sind.

4. Verfahren nach Anspruch 1 bis 3,
dadurch gekennzeichnet,
daß der Beschleunigungsverlauf des Geräts in Abhängigkeit von der Last als Beschleunigungsweg zusammen mit dem zugehörigen Bremsweg in einem Bremswegspeicher abgelegt sind und daß anhand der gespeicherten Werte nach Messung eines Beschleunigungsweges über die zugeordneten Bremswege die Abschaltorte für die einzelnen Antriebsgeschwindigkeiten berechnet werden.

5. Verfahren nach Anspruch 4,
dadurch gekennzeichnet,
daß der Bremsweg anhand der gespeicherten Werte durch Interpolation berechnet wird.

6. Verfahren nach einem der Ansprüche 1 bis 5,
dadurch gekennzeichnet,
daß die Abschaltorte mittels eines mathematischen Modells, welches das Beschleunigungsverhalten und das Bremsverhalten des Antriebs in Abhängigkeit von der Antriebsbelastung enthält, berechnet werden.

7. Verfahren nach Anspruch 6,
dadurch gekennzeichnet,
daß bei einer Lernfahrt Parameter gemessen werden, mit denen mittels des mathematischen Modells der Beschleunigungsweg und der Bremsweg des Antriebs unter wechselnden Lastbedingungen errechnet wird.

8. Verfahren nach einem der Ansprüche 1 bis 7,
dadurch gekennzeichnet,
daß bei der Inbetriebnahme des Geräts der Beschleunigungsweg und der Bremsweg des unbelasteten Antriebs ermittelt und daraus für die einzelnen Antriebsgeschwindigkeiten jeweils eine Mindestentfernung des Abschaltortes vom Zielpunkt bestimmt werden.

9. Verfahren nach einem der Ansprüche 1 bis 8,
dadurch gekennzeichnet,
daß der zeitliche Verlauf des Bremsweges während jedes Positioniervorgangs gespeichert und anhand der gespeicherten Werte der Positioniervorgang wiederholt wird.

10. Verfahren nach einem der Ansprüche 1 bis 9,
dadurch gekennzeichnet,
daß der Positioniervorgang wiederholt wird, wenn der Zielpunkt um mehr als eine vorgegebene Abweichung verfehlt wird.

11. Verfahren nach Anspruch 10,
dadurch gekennzeichnet,
daß das Gerät vor dem emeuten Anfahren der Zielposition zurückgefahren wird.

12. Verfahren nach Anspruch 1,
dadurch gekennzeichnet,
daß jede einzelne gewünschte Zielposition über einen Steuerschalter einmal manuell angefahren wird und bei Erreichen der gewünschten Zielposition eine Lemtaste am Steuerschalter betätigt wird, wodurch die Zielinformation spannungsausfallsicher abgespeichert wird.

13. Verfahren nach einem der Ansprüche 1 oder 9,
dadurch gekennzeichnet,
daß eine bestimmte Anzahl von Zielpositionen abgespeichert wird und später ein zyklisches Anfahren mehrerer Zielpositionen durchgeführt wird.

14. Verfahren nach einem der Ansprüche 1 bis 11,
dadurch gekennzeichnet,
daß der Zielpunkt aus der kleinsten Geschwindigkeit heraus angefahren wird.

15. Einrichtung für die Positionierung eines Gerätes mittels eines Antriebs mit zumindest zwei festen Antriebsgeschwindigkeiten, der einen polumschaltbaren Drehstrom-Asynchron-Motor aufweist, wobei der Antrieb mit der höchsten Antriebsgeschwindigkeit beginnend zum Schalten auf die nächstniedrigere Antriebsgeschwindigkeit an jeweils einem vorbestimmten Abschaltort vor einem vorgegebenen Zielpunkt abschaltbar und bis zum Erreichen der nächstniedrigeren Antriebsgeschwindigkeit abbremsbar ist,
dadurch gekennzeichnet,
daß das Gerät (8) mittels eines dem Motor (1) vorgeschalteten Getriebes (7), einer an den Motor ( 1 ) angeschlossenen aufgrund eines Programms betätigbaren Steuerung ( 3 ) und einem mit dem Motor ( 1 ) und der Steuerung (3) verbundenen Wegmeßsystem ( 4 ) positionierbar ist.

16. Einrichtung nach Anspruch 15,
dadurch gekennzeichnet
daß mittels des Wegmeßsystems (4) Informationen über den Standort, die Fahrtrichtung und die Geschwindigkeit des Geräts (8) kontinuierlich an die Steuerung ( 3 ) weiterleitbar sind.

17. Einrichtung nach Anspruch 15 oder 16,
dadurch gekennzeichnet,
daß das Wegmeßsystem (4) aus einem inkrementalen Wegmeßsystem oder aus einem absolut kodierbaren Wegmeßsystem besteht.

18. Einrichtung nach einem der Ansprüche 15 bis 17,
dadurch gekennzeichnet,
daß an die programmierte Steuerung ( 3 ) und/oder an ein Handsteuergerät ein Computer ( 8 ) anschließbar ist.

19. Einrichtung nach einem der Ansprüche 15 bis 18,
dadurch gekennzeichnet,
daß an die Steuerung ( 3 ) ein Kodierschalter ( 9 ) für die Zielvorgabe angeschlossen ist, der das Ziel vorgibt und daß der Start manuell auslösbar ist.

20. Einrichtung nach einem der Ansprüche 18 oder 19,
dadurch gekennzeichnet,
daß das Handsteuergerät den Kodierschalter ( 9 ) für die Zielvorgabe enthält.

21. Einrichtung nach einem der Ansprüche 15 bis 20,
dadurch gekennzeichnet,
daß die Steuerung ( 3 ) einen Speicher umfaßt, in dem der Beschleunigungsweg und die zu den Antriebsgeschwindigkeiten zugehörigen Bremswege des Gerätes (8) lastabhängig tabellarisch abgelegt sind.
